# EUROPÄISCHE PATENTSCHRIFT

(11) **EP 3 204 273 B1**
(45) Veröffentlichungstag und Bekanntmachung des Hinweises auf die Patenterteilung: **13.01.2021**
(21) Anmeldenummer: 15760402.6
(22) Anmeldetag: 24.08.2015
(51) Int. Cl.: B60W 10/02, B60K 6/48, B60W 10/08, B60W 20/00, B60W 30/06

(54) **VERFAHREN UND VORRICHTUNG ZUM BETREIBEN EINES KRAFTFAHRZEUGS**
METHOD AND DEVICE FOR OPERATING A MOTOR VEHICLE
PROCÉDÉ ET DISPOSITIF PERMETTANT DE FAIRE FONCTIONNER UN VÉHICULE AUTOMOBILE

(30) Priorität: 06.10.2014 DE 102014220123
(43) Veröffentlichungstag der Anmeldung: 16.08.2017
(73) Patentinhaber: Robert Bosch GmbH, 70442 Stuttgart (DE)
(72) Erfinder: VOGELGESANG, Markus, 71726 Benningen am Neckar (DE); WALTER, Heiko, 74199 Untergruppenbach (DE)
(86) Internationale Anmeldenummer: PCT/EP2015/069322
(87) Internationale Veröffentlichungsnummer: WO 2016/055212

(56) Entgegenhaltungen:
- WO-A2-99/21263
- DE-A1- 19 817 142
- US-A1- 2001 022 245

## Beschreibung

Die Erfindung betrifft ein Verfahren zum Betreiben eines Kraftfahrzeugs, das als ansteuerbare Betriebseinrichtungen einen Antriebsstrang mit einer Brennkraftmaschine und mit einem manuellen Schaltgetriebe aufweist, wobei das Schaltgetriebe durch Betätigen einer Trennkupplung von der Brennkraftmaschine abkoppelbar oder an die Brennkraftmaschine ankoppelbar ist, sowie eine Bremseinrichtung und eine Lenkeinrichtung, wobei zur Durchführung eines Parkvorgangs zumindest einige der Betriebseinrichtungen automatisch angesteuert werden.

Ferner betrifft die Erfindung eine Vorrichtung zum Betreiben eines Kraftfahrzeugs mit den Merkmalen des Oberbegriffs des Anspruchs 4, die die oben genannten Betriebseinrichtungen aufweist, sowie ein Steuergerät, das zur Durchführung eines Parkvorgangs zumindest einige der Betriebseinrichtungen automatisch ansteuert.

### Stand der Technik

Bei Kraftfahrzeugen mit manuellem Schaltgetriebe ist es bisher nicht möglich, die Fahrtrichtung des Kraftfahrzeugs unabhängig vom Fahrer zu ändern, da dieser zunächst das Schaltgetriebe von einem Vorwärtsgang in einen Rückwärtsgang schalten muss. Im Falle eines automatisierten Parkassistenssystems, bei welchem ein automatisiertes Einparken zur Verfügung gestellt werden soll, werden die Lenkeinrichtung und gegebenenfalls Anfahr- und Bremsvorgänge des Kraftfahrzeugs unabhängig vom Fahrer automatisch durchgeführt. Der Fahrer wird jedoch aufgefordert, den korrekten Gang für die Vorwärtsbewegung oder die Rückwärtsbewegung einzulegen, da ansonsten das Parkmanöver nicht durchgeführt werden kann.

Die Offenlegungsschrift WO 99/21263 A2 offenbart ein Hybridfahrzeug, das einen Antriebsstrang mit einer elektrischen Antriebsmaschine sowie mit einer Brennkraftmaschine und einem manuellen Schaltgetriebe aufweist. Das Schaltgetriebe ist durch Betätigen einer Trennkupplung von der Brennkraftmaschine ab- beziehungsweise an die Brennkraftmaschine ankoppelbar. Das Hybridfahrzeug kann sowohl in Vorwärts- als auch in Rückwärtsrichtung durch den Elektromotor bewegt werden. Auch US 2001/022245 A1 offenbart ein solches Hybridfahrzeug. DE 198 17 142 A1 zeigt ein Fahrzeug mit zumindest einem elektrischen Antrieb, wobei zum Durchführen eines automatischen Parkvorganges der zumindest eine elektrische Antrieb mittels einer Fernbedienung angesteuert wird.

### Offenbarung der Erfindung

Das erfindungsgemäße Verfahren mit den Merkmalen des Anspruchs 1 hat den Vorteil, dass trotz Vorsehen eines manuellen Schaltgetriebes nunmehr ein Parkvorgang vollautomatisch durchgeführt werden kann, unabhängig davon, ob ein Fahrer vorhanden ist oder nicht, dadurch kann beispielsweise auch ein ferngesteuerter Einparkvorgang bei einem Kraftfahrzeug mit manuellem Schaltgetriebe durchgeführt werden. Erfindungsgemäß ist hierzu vorgesehen, dass zur Durchführung eines vollautomatischen Parkvorgangs eine elektrische Antriebsmaschine zum Antreiben des Fahrzeugs in eine Vorwärtsbewegung und in eine Rückwärtsbewegung angesteuert wird. Zusätzlich zu der Brennkraftmaschine ist somit eine elektrische Antriebsmaschine vorgesehen, die zum Antreiben des Kraftfahrzeugs dient. Zum Durchführen des Parkvorgangs wird die elektrische Antriebsmaschine angesteuert, um das Fahrzeug vorwärts oder rückwärts anzutreiben. Dadurch lässt sich das Kraftfahrzeug unabhängig von einer Schaltstellung des Schaltgetriebes bewegen. Dabei wird davon ausgegangen, dass auch eine Bewegung in Rückwärtsrichtung, wenn ein Vorwärtsgang des Schaltgetriebes eingelegt ist, möglich ist. Für die kurzen, bei einem Parkvorgang zu befahrenden Strecken, ist ein Betreiben des Antriebsstrangs in Rückwärtsrichtung unabhängig von der Schaltstellung des Schaltgetriebes grundsätzlich möglich.

Erfindungsgemäß ist vorgesehen, dass zum Durchführen des vollautomatischen Parkvorgangs die Trennkupplung geschlossen und die Brennkraftmaschine abgeschaltet wird. Die Brennkraftmaschine wird dann durch die elektrische Antriebsmaschine mitgeschleppt, und zwar beim Betrieb in Rückwärtsbewegung in zum Normalbetrieb entgegensetzender Rotationsrichtung der Abtriebswelle der Brennkraftmaschine. Im Rahmen eines Einparkvorgangs ist das Rückwärtsschleppen der Brennkraftmaschine möglich, ohne dass die Brennkraftmaschine beschädigt wird.

Die erfindungsgemäße Vorrichtung mit den Merkmalen des Anspruchs 2 zeichnet sich dadurch aus, dass eine elektrische Antriebsmaschine vorgesehen ist, und dass das Steuergerät die elektrische Antriebsmaschine zum Durchführen eines vollautomatischen Parkvorgangs zum Antreiben des Fahrzeugs in eine Vorwärtsbewegung und in eine Rückwärtsbewegung ansteuert. Insbesondere wird so das erfindungsgemäße Verfahren durchgeführt. Es ergeben sich hierdurch die bereits genannten Vorteile.

Erfindungsgemäß ist vorgesehen, dass die elektrische Antriebsmaschine zwischen der Trennkupplung und der Brennkraftmaschine zwischengeschaltet oder an der Brennkraftmaschine direkt angeordnet und mit dieser wirkverbunden ist. Dadurch wird durch Öffnen der Trennkupplung die elektrische Antriebsmaschine ebenfalls von dem Schaltgetriebe abgekoppelt. Wird der Parkvorgang mittels der elektrischen Antriebsmaschine durchgeführt, wird die Brennkraftmaschine damit in jedem Fall mitgeschleppt.

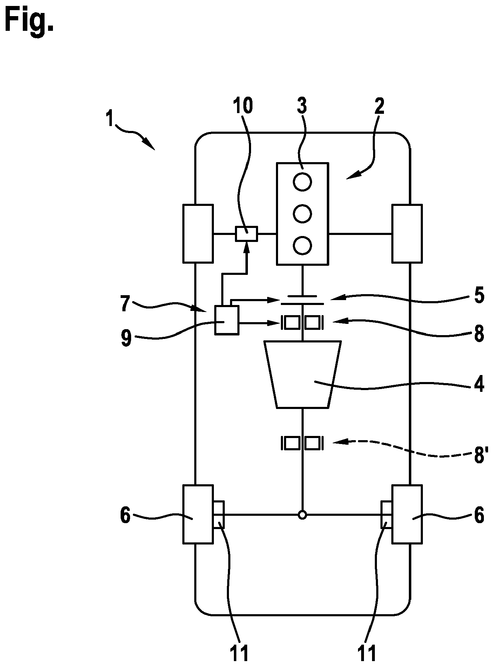

Im Folgenden soll die Erfindung anhand der beispielhaften Zeichnung näher erläutert werden. Dazu zeigt die einzige Figur ein Kraftfahrzeug in einer vereinfachten Draufsicht.

Die Figur zeigt in einer vereinfachten Darstellung eine Draufsicht auf ein Kraftfahrzeug 1, das einen Antriebsstrang 2 mit einer Brennkraftmaschine 3 und mit einem manuellen Schaltgetriebe 4 aufweist. Zwischen der Brennkraftmaschine 3 und dem Schaltgetriebe 4 ist eine betätigbare Trennkupplung 5 vorgesehen, die im unbetätigten Zustand geschlossen und im betätigten Zustand geöffnet ist. Die Kupplung 5 ist insbesondere als selbstschließende Reibkupplung ausgebildet. Das Schaltgetriebe 4 ist durch seine Ausbildung als manuelles Schaltgetriebe 4 nur durch den Fahrer des Kraftfahrzeugs 1 bedienbar, sodass ein Gangwechsel nur durch den Fahrer eingeleitet werden kann. Das Schaltgetriebe 4 ist Abtriebsseitig mit Antriebsrädern 6 des Kraftfahrzeugs verbunden.

Ferner weist das Kraftfahrzeug 1 eine Vorrichtung 7 auf, die dazu dient einen Parkvorgang des Kraftfahrzeugs vollautomatisch durchzuführen. Die Vorrichtung 7 weist dazu eine elektrische Antriebsmaschine 8 sowie ein Steuergerät 9 auf. Das Steuergerät 9 ist mit der Kupplung 5, der elektrischen Maschine 8, mit einer Lenkeinrichtung 10 sowie mit einer hier nicht näher dargestellten Umfeldsensorik des Kraftfahrzeugs 1 verbunden. Im Gegensatz zu der auf der Figur gezeigten Anordnung ist die Antriebsmaschine 8 erfindungsgemäß zwischen der Trennkupplung 5 und der Brennkraftmaschine 3 zwischengeschaltet oder an der Brennkraftmaschine 3 direkt angeordnet und mit dieser wirkverbunden.

Durch die Umfeldsensorik ermittelt das Steuergerät 9 Fahrwege, entlang welcher das Kraftfahrzeug 1 bewegt werden muss, um einen Parkvorgang in eine gewünschte Parklücke vollautomatisch durchzuführen. Zur Durchführung des Parkvorgangs schließt das Steuergerät 9 die Kupplung 5 und schaltet die Brennkraftmaschine 3 ab. Weiterhin steuert das Steuergerät 9 die Lenkeinrichtung 10 sowie die elektrische Antriebsmaschine 8 an, um den Parkvorgang durchzuführen. Dabei wird die elektrische Antriebsmaschine 8 insbesondere zum Vorwärtsbetrieb und zum Rückwärtsbetrieb des Kraftfahrzeugs 1 angesteuert. Die elektrische Antriebsmaschine 8 wird somit derart angesteuert, dass sie in die eine oder in die andere Drehrichtungen ein Drehmoment abgibt, um das Kraftfahrzeug vorwärts oder rückwärts zu betreiben. Dabei kann der im Schaltgetriebe 4 zuletzt eingelegte Gang beibehalten werden. Das Steuergerät 9 erfasst zweckmäßigerweise den eingelegten Gang, um die elektrische Antriebsmaschine 8 in die gewünschte Richtung anzutreiben, sodass insbesondere in Abhängigkeit davon, ob ein Vorwärtsgang oder ein Rückwärtsgang des Schaltgetriebes 4 eingelegt ist, die elektrische Antriebsmaschine in die eine oder in die andere Richtung angetrieben wird, um das Kraftfahrzeug 1 vorwärts oder rückwärts zu bewegen.

Die Vorrichtung 7 ermöglicht somit, dass das Kraftfahrzeug 1 trotz eines manuellen Schaltgetriebes 4 vollautomatisch einen Parkvorgang, der sowohl eine Vorwärtsfahrt als auch eine Rückwärtsfahrt benötigt, durchführt. Da die elektrische Antriebsmaschine 8 kein Getriebe benötigt, um ihre Drehrichtung zu ändern, ist somit auch kein Eingreifen des Fahrers notwendig, um die Fahrrichtung zu ändern. Dies steigert den Komfort bei automatischen Einparkvorgängen und macht zudem auch ein ferngesteuertes Einparken möglich. Das Steuergerät 9 entscheidet durch Nutzung der Umfeldsensorik, wie beispielsweise Ultraschallsensoren, Radarsensoren, Kamerasensoren oder dergleichen, welche Vorgänge für ein erfolgreiches Einparken notwendig sind. Dabei entscheidet das Steuergerät 9, ob angefahren, beschleunigt, gebremst oder angehalten werden muss, und bestimmt zudem den korrekten Lenkwinkel für die Lenkeinrichtung 10. Das Steuergerät 9 ist dazu optional mit einem Bremssystem 11 des Kraftfahrzeugs 1 verbunden. Zur Durchführung des Parkvorgangs ist es dann selbstverständlich notwendig, dass genügend Energie in einem elektrischen Speicher zum Betreiben der Antriebsmaschine 8 zur Verfügung steht.

Die Brennkraftmaschine wird erfindungsgemäß beim Durchführen des Parkvorgangs durch den Elektromotor in beide Richtungen mitgeschleppt.

## Patentansprüche

1. Verfahren zum Betreiben eines Kraftfahrzeugs (1), das als ansteuerbare Betriebseinrichtungen einen Antriebsstrang (2) mit einer Brennkraftmaschine (3) und einem manuellen Schaltgetriebe (4) aufweist, wobei das Schaltgetriebe (4) durch Betätigen einer Trennkupplung (5) von der Brennkraftmaschine (3) abkoppelbar oder an die Brennkraftmaschine (3) ankoppelbar ist, sowie eine Bremseinrichtung (11) und eine Lenkeinrichtung (10), wobei zur Durchführung eines Parkvorgangs zumindest einige der Betriebseinrichtungen automatisch angesteuert werden, und mit einer elektrischen Antriebsmaschine (8), die zwischen der Trennkupplung (5) und der Brennkraftmaschine (3) zwischengeschaltet oder an der Brennkraftmaschine (3) direkt angeordnet und mit dieser wirkverbunden ist, **dadurch gekennzeichnet, dass** zum Durchführen eines vollautomatischen Parkvorgangs die elektrische Antriebsmaschine (8) zum Antreiben des Fahrzeugs in eine Vorwärtsbewegung und in eine Rückwärtsbewegung angesteuert wird, wobei die Trennkupplung (5) geschlossen und die Brennkraftmaschine (3) abgeschaltet wird, so dass die Brennkraftmaschine (3) durch die elektrische Antriebsmaschine (8) in beide Richtungen mitgeschleppt wird.

2. Vorrichtung zum Betreiben eines Kraftfahrzeugs, insbesondere durch ein Verfahren nach Anspruch 1, die als Betriebseinrichtungen einen Antriebsstrang (2) mit einer Brennkraftmaschine (3) und mit einem manuellen Schaltgetriebe (4) aufweist, wobei das Schaltgetriebe (4) durch Betätigen einer Trennkupplung (5) von der Brennkraftmaschine (3) abkoppelbar oder an die Brennkraftmaschine (3) ankoppelbar ist, sowie eine Bremseinrichtung (11) und eine Lenkeinrichtung (10), und mit einem Steuergerät (9), das zur Durchführung eines Parkvorgangs zumindest einige der Betriebseinrichtungen automatisch ansteuert, und mit einer elektrischen Antriebsmaschine (8), die zwischen der Trennkupplung (5) und der Brennkraftmaschine (3) zwischengeschaltet oder an der Brennkraftmaschine (3) direkt angeordnet und mit dieser wirkverbunden ist, **dadurch gekennzeichnet, dass** das Steuergerät (9) die elektrische Antriebsmaschine (8) zum Durchführen eines vollautomatischen Parkvorgangs zum Antreiben des Kraftfahrzeugs in eine Vorwärtsbewegung und in eine Rückwärtsbewegung ansteuert, die Trennkupplung (5) schließt und die Brennkraftmaschine (3) abschaltet, so dass die Brennkraftmaschine (3) durch die elektrische Antriebsmaschine (8) in beide Richtungen mitgeschleppt wird.

## Claims

1. Method for operating a motor vehicle (1) which has a drive train (2) with an internal combustion engine (3) and a manual transmission (4) as operating devices which can be actuated, wherein the manual transmission (4) can be uncoupled from the internal combustion engine (3) or coupled to the internal combustion engine (3) by activating a clutch (5), and a brake device (11) and a steering device (10), wherein, in order to carry out a parking process, at least some of the operating devices are actuated automatically, and having an electric drive machine (8) which is intermediately connected between the clutch (5) and the internal combustion engine (3) or is arranged directly on the internal combustion engine (3) and operatively connected thereto, **characterized in that**, in order to carry out a fully automatic parking process, the electric drive machine (8) is actuated in order to drive the vehicle in a forward movement and in a rearward movement, wherein the clutch (5) is closed and the internal combustion engine (3) is switched off so that the internal combustion engine (3) is entrained in both directions by the electric drive machine (8).

2. Device for operating a motor vehicle, in particular by means of a method according to Claim 1, which device has a drive train (2) with an internal combustion engine (3) and a manual transmission (4) as operating devices, wherein the manual transmission (4) can be uncoupled from the internal combustion engine (3) or coupled to the internal combustion engine (3) by activating a clutch (5), and a brake device (11) and a steering device (10), and having a control device (9) which automatically actuates at least some of the operating devices in order to carry out a parking process, and having an electric drive machine (8) which is intermediately connected between the clutch (5) and the internal combustion engine (3) or is arranged directly on the internal combustion engine (3) and operatively connected thereto, **characterized in that**, in order to carry out a fully automatic parking process, the control device (9) actuates the electric drive machine (8) in order to drive the motor vehicle in a forward movement and in a rearward movement, closes the clutch (5) and switches off the internal combustion engine (3), so that the internal combustion engine (3) is entrained in both directions by the electric drive machine (8).

## Revendications

1. Procédé de fonctionnement d'un véhicule automobile (1) qui comporte comme dispositifs de fonctionnement commandables une chaîne de cinématique (2) pourvue d'un moteur à combustion interne (3) et d'une boîte de vitesses manuelle (4), la boîte de vitesses (4) pouvant être désaccouplée du moteur à combustion interne (3) ou accouplée au moteur à combustion interne (3) par actionnement d'un embrayage de séparation (5), ainsi qu'un dispositif de freinage (11) et un dispositif de direction (10), au moins certains des dispositifs de fonctionnement étant commandés automatiquement pour effectuer un processus de stationnement, et une machine d'entraînement électrique (8) qui est interposée entre l'embrayage de séparation (5) et le moteur à combustion interne (3) ou qui est disposée directement au niveau du moteur à combustion interne (3) et est reliée fonctionnellement à celui-ci, **caractérisé en ce que**, pour effectuer un processus de stationnement entièrement automatique, la machine d'entraînement électrique (8) est commandée pour entraîner le véhicule dans un mouvement vers l'avant et dans un mouvement vers l'arrière, l'embrayage de séparation (5) étant fermé et le moteur à combustion interne (3) étant arrêté de sorte que le moteur à combustion interne (3) soit entraîné dans les deux sens par la machine d'entraînement électrique (8).

2. Dispositif de fonctionnement d'un véhicule automobile, notamment par un procédé selon la revendication 1, lequel dispositif comporte comme dispositifs de fonctionnement une chaîne de cinématique (2) pourvue d'un moteur à combustion interne (3) et d'une boîte de vitesses manuelle (4), la boîte de vitesses (4) pouvant être désaccouplée du moteur à combustion interne (3) ou accouplée au moteur à combustion interne (3) par actionnement d'un embrayage de séparation (5), ainsi qu'un dispositif de freinage (11) et un dispositif de direction (10), et une unité de commande (9) qui commande automatiquement au moins certains des dispositifs de fonctionnement pour effectuer un processus de stationnement, et une machine d'entraînement électrique (8) qui est interposée entre l'embrayage de séparation (5) et le moteur à combustion interne (3) ou qui est disposée directement au niveau du moteur à combustion interne (3) et est reliée fonctionnellement à celui-ci, **caractérisé en ce que**, pour effectuer un processus de stationnement entièrement automatique, l'unité de commande (9) commande la machine d'entraînement électrique (8) pour entraîner le véhicule dans un mouvement vers l'avant et dans un mouvement vers l'arrière, ferme l'embrayage de séparation (5) et arrête le moteur à combustion interne (3) de sorte que le moteur à combustion interne (3) soit entraîné dans les deux sens par la machine d'entraînement électrique (8).
